**Europäisches Patentamt**

**European Patent Office**

**Office européen des brevets**

(11) Veröffentlichungsnummer: **0 207 368**
**A1**

(12) # EUROPÄISCHE PATENTANMELDUNG

(21) Anmeldenummer: **86108291.5**

(22) Anmeldetag: **18.06.86**

(51) Int. Cl.⁴: **A 01 B 49/06**

(30) Priorität: **03.07.85 DE 3523725**

(43) Veröffentlichungstag der Anmeldung:
**07.01.87 Patentblatt 87/2**

(84) Benannte Vertragsstaaten:
**AT BE CH DE FR GB IT LI LU NL SE**

(71) Anmelder: **Tremmel, Hermann**
**Gutshof**
**D-8702 Greussenheim(DE)**

(72) Erfinder: **Tremmel, Hermann**
**Gutshof**
**D-8702 Greussenheim(DE)**

(54) **Breitflächige Saatgutverteilung und eine Sämaschine.**

(57) In der Landwirtschaft ist beim aussäen von Saatgut besonders wichtig, daß jedes einzelne Saatkorn die gleichen Keimbedingungen vorfindet. Dies zu ermöglichen, ist besonders in Gegenwart von organischer Masse ebenso schwierig, wie das Saatgut breitflächig auf die wasserführende Sohle der Saatgutablagefläche in einer Horizontale abzulegen, innig mit dieser zu verbinden und anschließend gleichmäßig zu bedecken.

Bei einer Vorrichtung zur breitflächigen Saatgutverteilung für Sämaschinen und einer Sämaschine in Verbindung mit bekannten Bodenbearbeitungsgeräten (2, 2a, 2b) fließt das Saatgut (8) ab den Dosiergeräten (16) über ein Rohrsystem (15) zu den links und rechts neben einer angetriebenen rotierenden oder kreisenden Bodenbearbeitungsvorrichtung (2, 2a, 2b) angeordneten Saatgutverteilerelementen (9) ab. Von denen wird es in horizontalem Flug im Schutz einer Palnierschiene (4), die die Saatgutablagefläche (1a) einbnet, sowie Restpflanzen und Erdstege zusätzlich abschert, quer zur Fahrtrichtung (A) auf die wasserführende Sohle der Saatgutablagefläche (1a) aufgestreut, gegebenenfalls eingewalzt und anschließend abgedeckt.

FIG. 1

EP 0 207 368 A1

Hermann Tremmel                          8702 Greussenheim
                                         Gutshof

Breitflächige Saatgutverteilung und Sämaschine.

Die Erfindung betrifft eine Vorrichtung zur breitflächigen
Saatgutverteilung.
Ferner betrifft die Erfindung eine Sämaschine in Verbindung
mit bekannten Bodenbearbeitungsgeräten.

Bei herkömmlichen Sämaschinen erfolgt die Saatgutverteilung
entweder über mehrere Säschare die in den Boden greifen und
dort das Saatgut ablegen, oder über mehrere Särohre, die
kurz über dem Boden enden und das Saatgut in Form eines
Saatbandes in den abfließenden Erdstrom einleiten. Beide
Verfahren sind besonders in Gegenwart von organischer Masse
nicht in der Lage, das Saatgut gleichmäßig tief in einer Horizontale, auf, oder zumindest an die unmittelbare Nähe der
wasserführenden Sohle breitflächig abzulegen.

Es ist eine Sämaschine bekannt, die in Gegenwart von organischer Masse mittels einer keilförmigen Leitschiene, mit der
ein Rohrbündel mit mehreren Saatgutausläufen integriert ist,
es ermöglicht, das Saatgut breitflächig auf die wasserführende Sohle abzulegen. (Deutsche Offenlegungsschrift DE 32
47 884 A1) Bauartbedingt muß diese Leitschiene mit Rohrbündel an ihrer Oberseite ein großes Ausmaß hinnehmen. Darauf
baut sich besonders beim Säen in feuchtem Bodenzustand ein
Erdkeil mit organischer Masse auf und behindert den kontinuierlichen Erdfluß ab dem rotierenden Werkzeug.

                                              - 2 -

Folglich muß das Säen des öfteren unterbrochen werden, um das Rohrbündel an ihrer Oberseite von dem Erdkeil zu befreien. Erfolgt dies nicht rechtzeitig, ist keine ausreichende Bedeckung des Saatgutes mehr gegeben.

Hinzu kommt, daß des öfteren während der Saat ein Teil des Erdkeils abrutscht, was folglich zu unregelmäßig abgelegten Erdhaufen in dem schon gesäten Feld führt und somit eine Nachbearbeitung erfordert.

Die über dem Boden gleitende Anordnung der Leitschiene und deren Abrundung an der dem Boden benachbarten Kante macht es besonders organischer Masse und Wurzelunkräutern mit Erde vermischt möglich, sich um die Abrundung festzulegen, wobei es häufig zu Bodenkontakt kommt. Dies artet, bedingt durch die federnde Anordnung der relativ großflächigen Unterkante und der steifen Masse der Leitschiene zu rupfartigen Schwingungen derart aus, daß sie in das rotierende Werkzeug eintaucht und zu Schädigungen dessen führt.

Aus der DE 33 07 709 C1 ist eine Säschiene bekannt die mit ihrem schuhartigen Vorderteil, fast unter das rotierende Werkzeug greift und so die gesamte abgehobene Bodenschicht über sich lenkt und diese, nach dem auftragen des Saatgutes das mittels mehrerer Saatgutabfallrohre und eines Prallbleches erfolgt, wieder auf das Saatgut aufstreut.

Bei der bekannten GB-PS 10 94 681 wird ebenfalls die gesamte vom rotierenden Werkzeug abgehobene Erdschicht über ein in ihrem Neigungswinkel relativ flach angestelltes Schild gelenkt und das Saatgut ebenfalls über mehrere Saatgutabfallrohre einer Schüttelplatte zugeteilt, von wo aus die breitflächige Verteilung erfolgt.

Diese Saatgutabfallrohre behindern aber den kontinuierlichen Erdfluß mir organischer Masse und teilen ihn zudem noch in vertikaler Linie, so daß eine unregelmäßige und etwa Bifangartige Saatgutabdeckung erfolgt.

Alle drei Offenlegungsschriften kennzeichnet, daß verfahrensbedingt die Saatgutablagetiefe über die gesamte abgehobene Bodenschicht erfolgt, das heißt, die gesamte vom rotierenden Werkzeug abgetragene Erdschicht nebst organischer Masse wird, ohne einer möglichen Querverteilung und in Fahrtrichtung

gesehen, an etwa gleicher Stelle wieder auf das Saatgut aufgetragen und so bei unebenen Bodenverhältnissen sowie in den Schlepperspuren eine unregelmäßige Abdeckungshöhe des Saatgutes erwirkt.

Die Erfindung stellt sich daher die Aufgabe, eine Vorrichtung zur breitflächigen Saatgutverteilung für Sämaschinen und eine Sämaschine in Verbindung mit bekannten Bodenbearbeitungsgeräten zu schaffen, die diese Mängel ausschließt und das Saatgut bei bearbeiteten und unbearbeiteten Böden, sowie auch in Gegenwart von organischer Masse, auf, sowie auch an die unmittelbare Nähe der wasserführenden Sohle auf eine ebene Saatgutablage ablegt und innig miteinander verbindet. Außerdem soll eine variable Saatgutablagetiefe bzw. Abdeckungshöhe des Saatgutes und eine gleichzeitige Vernichtung der beim Saatzeitpunkt vorhandenen Unkräuter oder sonstiger unerwünschter Pflanzen gewährleistet sein.

Erfindungsgemäß erfolgt die Saatgutverteilung dadurch, daß das Saatgut ab den Dosiergeräten über ein von den Dosiergeräten seitlich neben einer rotierenden Bodenbearbeitungsvorrichtung verlaufendes Rohrsystem Saatgutverteilerelementen zugeführt wird, durch die es in horizontalem Flug im Bereich einer nahe hinter dem rotierenden Werkzeug angeordneten über die gesamte Arbeitsbreite erstreckten Schutz bietenden Führungsvorrichtung, in diese integriert, auf die Saatgutablagefläche verstreut, und anschließend gleichmäßig abgedeckt wird.

Zur Sämaschine wird bevorzugt vorgeschlagen, eine Bodenbearbeitungsvorrichtung die ein angetriebenes rotierendes Werkzeug aufweist, zum Beispiel eine Bodenfräse, sowie einer quer zur Fahrtrichtung, nahe hinter dem rotierenden Werkzeug angeordneten, sich über die gesamte Arbeitsbreite erstreckende Planierschiene, mit der die Saatgutablagefläche eingeebnet und gegebenenfalls mit einem gezielt einstellbaren Teil, der vom rotierenden Werkzeug aufgeworfenen Erde planiert wird und einer über die gesamte Arbeitsbreite erstreckende Walze

mit der das zuvor aufgestreute Saatgut eingewalzt wird.

Das rotierende Werkzeug der Bodenbearbeitungsvorrichtung nimmt eine vorgegebene Schichtstärke vom Boden ab und schleudert sie in bekannter Weise, entgegen der Fahrtrichtung nach hinten weg. Dabei prallt auch ein einstellbarer Teil gegen die Planierschiene, je nach Abstand dieser zum rotierenden Werkzeug und sammelt sich kontinuierlich vor dieser an. Der so entstehende Erdvorrat wird verwendet zur Planierung der Saatgutablagefläche, sowie zur Einebnung gegebenenfalls tiefer eingedrückter Schlepperspuren, oder dergleichen. Das zuviel an Erdvorrat, bzw. die Resterde mit organischer Masse, wird kontinuierlich und zwangsläufig vom rotierenden Werkzeug erfaßt und über die Planierschiene geschleudert, wobei hinter dieser, bzw. im Bereich der Schutz bietenden Führungsvorrichtung, ein toter, von fliegenden Erdpartikelchen freier Raum entsteht, in den das Saatgut ungestört, von den erfindungsgemäßen Saatgutverteilerelementen quer zur Fahrtrichtung eingestreut, und von der Walze angedrückt werden kann und anschließend von der Resterde, mit gegebenenfalls organischer Masse, die über die Planierschiene geschleudert wird, abgedeckt wird und somit die Sätiefe darstellt.

Die Planierschiene ist gelenkig am Maschinenrahmen und federbelastbar zum Boden hin ausgeführt, sowie an der der Erde zugewandten Seite, mit einer schneidenden Vorrichtung versehen. Dies hat den Vorteil, daß Erdstege, die vom rotierenden Werkzeug hinterlassen wurden, noch zusätzlich abgeschoren werden und sich wiederum vor dieser ansammeln und somit zusätzlich zur Einebnung der Saatgutablagefläche, oder zur Abdeckung des Saatgutes benützt werden. Desgleichen werden Restpflanzen, die vom rotierenden Werkzeug nicht erfaßt wurden, noch sicher abgeschoren und ebenfalls zur Abdeckung des Saatgutes mitbenützt.

Besonders vorteilhaft ist es, wenn die Planierschiene in ihrem Neigungswinkel und Abstand zum rotierenden Werkzeug verstellbar ausgeführt ist, denn dies gewährleistet eine optimale Anpassung allen Erfordernissen. Vom rotierenden

Werkzeug und Bodenfläche ausgehend, ist beispielsweise ein etwa 45 Grad Neigungswinkel mit geringem Abstand mitunter vorgesehen, für feuchtere und ebene Bodenverhältnisse, wobei wie schon erwähnt, Erdstege und Restpflanzen sicher abgeschoren werden und mit dem relativ kleinen Erdvorrat, der sich zwischen dem rotierenden Werkzeug und der Planierschiene bilden kann, zumindest eine noch mäßige Planierung, bzw. Ausgleichung der Saatgutablagefläche ermöglicht wird. Bei dieser Version kommt das Saatgut fast ausnahmslos auf die wasserführende Sohle.

Eine steilere Anstellung der Planierschiene, mit einem Neigungswinkel bis zu etwa 90 Grad und gegebenenfalls weiteren Abstand ist für trockenere und unebene Bodenverhältnisse gedacht, denn der Abstand und somit der Erdvorrat zwischen dem rotierenden Werkzeug und der Planierschiene kann sich vergrößern und folglich auch der Planierungseffekt.

Bei sandigen, oder besonders pulvrigen und lockeren Bodenverhältnissen, ist ein eher schleppender Planierungseffekt vorteilhaft, was einem Neigungswinkel der Planierschiene bis etwa 150 Grad entsprechen kann. Bei diesen beiden Versionen kommt das Saatgut größtenteils an die unmittelbare Nähe der wasserführenden Sohle.

Um noch einen zusätzlichen Zerkleinerungs- und Streueffekt der vom rotierenden Werkzeug abgehobenen Erde, die über die Planierschiene geschleudert werden soll zu erzielen, wird vorgeschlagen, die Planierschiene an der der Erde abgewandten Seite mit Stegen in geeigneten Abständen zu verlängern, wobei die oberen Enden, jeweils von der Mitte der Planierschiene ab, wenigstens teilweise derart leicht nach außen abgebogen sind, daß die Erde mehr nach außen abgeleitet wird. Das hat den Vorteil, daß der durch die Schlepperräder nach unten verdrängte- und nach innen aufgewölbte Boden, der auch nach der Überfahrt mit der Bodenbearbeitungsvorrichtung an derselben Stelle in zu großer Menge vorhanden ist, sich mehr auf die Schlepperspuren aufstreut, damit auch hier eine ausreichende Bedeckung des Saatgutes gewährleistet ist.

Um eine von der Bearbeitungstiefe unabhängige, variable Saatgutablagetiefe zu ermöglichen, wird vorgeschlagen, die Planierschiene nicht auf Bodenkontakt, sondern durch einen beidseitigen verstellbaren Anschlag am Maschinenrahmen, oder Abstützung zum Boden hin, in einem vorgewählten Abstand einzustellen oder auch bei steinfreien Böden gegebenenfalls zu arretieren, wodurch ein mehr oder weniger großer, gezielt einstellbarer Teil des vom rotierenden Werkzeug aufgeworfenen Bodens, unter oder über die Planierschiene fließt, bzw. geschleudert wird und folglich das Saatgut, je nach Bedarf auch verschieden hoch abgedeckt werden kann.

Die federbelastbare Planierschiene, ist zweckmäßig in ihrem Drehpunkt am Maschinenrahmen, auf etwa gleicher Höhe nach hinten versetzt zur Lagerung des rotierenden Werkzeuges ausgeführt. Dies ist bei steinigen Böden besonders vorteilhaft, denn in Gegenwart eines größeren Steines zwischen dem rotierenden Werkzeug und der Planierschiene kann diese bogenförmig nach hinten und nach oben ausweichen und somit den Durchlaß vergrößern, wodurch Schädigungen vermieden werden. Hinzu kommt, daß die Planierschiene bei Bodenkontakt dauernden Erschütterungen ausgesetzt ist und somit Erdreich und organische Masse, die sich an ihr anhaften könnten, ständig abgeschüttelt werden. Außerdem ist es bei nassen und klebrigen Böden besonders vorteilhaft, daß bei jedem Hochheben der Sämaschine am Feldrand, die Planierschiene, bedingt durch die nach hinten versetzte Lagerung, an ihre Ausgangsstellung zurückgeht, das heißt, an die unmittelbare Nähe des rotierenden Werkzeuges, wobei zumindest bei einem Neigungswinkel von etwa 45 bis 90 Grad, eventuell verbackenes, mit organischer Masse behaftetes Erdreich das an ihr klebt, abgesprengt wird.

Bei der Ausbildung der Planierschiene ist besonders wesentlich, daß sich keine großen horizontalen Flächen bilden, auf denen sich Erde und organische Masse, ohne kontinuierlich abzurutschen, absetzen könnten und daß sich vor ihr, auch bei geringem Abstand zum rotierenden Werkzeug, ein noch genügend großer Erdvorrat für die Planierung ansammeln kann. Deshalb ist sie vorzugsweise ein entgegen dem rotierenden Werkzeug leicht gewölbtes Flachmaterial das an ihrer oberen Seite mit einer entgegen der Fahrtrichtung zum Boden hin abgewinkelten Schutzvorrichtung versehen ist, in deren Bereich das Saatgut nach dem Erfindungsvorschlag eingestreut wird.

Damit die schneidende Vorrichtung an der Planierschiene, bei einer Arretierung oder einer Begrenzung durch den Anschlag am Maschinenrahmen nicht ihre Bedeutung verliert, wird vorgeschlagen, diese im Abstand zur Planierschiene verstellbar auszubilden, damit ein bestimmt vorgegebener Teil der vom rotierenden Werkzeug aufgeworfenen Erde, schon zwischen der schneidenden Vorrichtung und der Unterkante der noch verbliebenen Planierschiene, je nach Abstand zueinander abfließen kann.

Die Ausführung des verstellbaren Neigungswinkels der Planierschiene ist einfach und zweckmäßig so ausgebildet, daß sie an ihrem jeweiligen äußeren Ende, an der der Erde abgewandten Seite an ihrer Halterung an der oberen Seite einen Drehpunkt aufweist und die Halterung nahe am unteren Ende, eine Verstellmöglichkeit in Form von mehreren Bohrungen aufweist, womit die Planierschiene dem jeweils gewünschten Neigungswinkel angepaßt werden kann.

Die Ausführung der erfindungsgemäßen Saatgutverteilerelemente kann bei der um eine vertikal ausgerichteten Achse rotierenden Verteilerscheiben, in einfachster Weise ein Rohr sein, das an seinem unteren Teil eine Austrittöffnung für das Saatgut aufweist. Diese Austrittöffnung ist durch einen Schutz gegen fliegende Erdpartikelchen oder dergleichen, vom rotierenden Werkzeug her abgeschirmt und ist in Richtung Mitte, quer zur Fahrtrichtung ausgerichtet. Im Rohrinneren, an der unteren Kante der Austrittöffnung für das Saatgut, ist eine rotierende, an einer Mittelachse oben und unten gelagerte Verteilerscheibe plaziert, die an ihrer Oberseite, vorzugsweise mit ungleich langen und gegebenenfalls ungleich zur Mittelachse angewinkelten Verteilerstegen bestückt ist. Dies führt zu einer ungleichmäßigen Wurfweite des Saatgutes und logischerweise zu einer gleichmäßigen Verteilung über die gesamte Saatgutablagefläche.

Die rotierenden Verteilerscheiben des Saatgutverteilerelementes können sich, je nach Ausbildung, um eine etwa vertikal ausgerichtete Achse mit einer beliebigen Neigung bis hin zu einer sich um eine etwa horizontal ausgerichtete Achse drehen, wobei als Drehrichtung links- und/oder rechtsdrehend gewählt werden kann.

Die Ausführung der rotierenden Verteilerscheiben werden bevorzugt so gewählt, daß sie sich um eine etwa vertikal ausgerichtete Achse und jeweils im Drehsinn zueinander gegenläufig drehen, das heißt, von hinten in Fahrtrichtung und Draufsicht gesehen, dreht sich die linksseitig Angeordnete im Uhrzeigersinn und die Rechtsseitige dagegen.

Da die Drehzahl der rotierenden Verteilerscheiben möglichst konstant und je nach Saatgutgröße zweckmäßig regelbar sein soll, ist ein elektrischer oder ein hydraulischer Antrieb vorgesehen, wobei als Energiequelle die Schlepperanlagen vorgesehen sind. Aber auch ein Antrieb von einem Abtrieb der Bodenbearbeitungsvorrichtung bzw. der Sämaschine wäre denkbar.

Um einen besonders innigen Kontakt des Saatgutes mit der Saatgutablagefläche zu erreichen und damit auch bei relativ trockenen Bodenverhältnissen einen sicheren Aufgang zu gewährleisten wird vorgeschlagen, hinter der Planierschiene, gegebenenfalls auch mit dieser kombiniert, eine Walze mit bevorzugt glatter Oberfläche anzuordnen, die das aufgestreute Saatgut schon in die Erde drückt bevor es mit der Erde die über die Planierschiene und über die Walze geschleudert wird, abgedeckt wird. Wenn nötig, kann die Walze angetrieben werden.

Unter Einbezug der Planierschiene wird in einem weiteren Vorschlag nach der Erfindung beabsichtigt, daß bei Sämaschinen mit einem angetriebenen rotierenden,- oder um eine vertikal ausgerichtete Achse kreisenden Bodenbearbeitungswerkzeugen, die bauartbedingt eine längere, auch ansteigende Saatgutförderstrecke nach den Dosiergeräten erfordern, diese entweder pneumatisch bis zu den erfindungsgemäßen Saatgutverteilerelementen erfolgt und ab hier das Saatgut nach dem Erfindungsvorschlag verstreut wird, oder aber am Ende der pneumatischen Saatgutförderstrecke an etwa gleicher Stelle pneumatische Saatgutverteilerelemente vorgesehen sind, die in einfachster Weise der Ausgang eines Hohlkörpers, beispielsweise mindestens eines Rohres sein können, mit gegebenenfalls einer düsenartigen das Saatgut streuenden Vorrichtung und gegebenenfalls mit Leit- und/oder Prallvorrichtungen versehen, damit das Saatgut wiederum nach dem Erfindungsvorschlag verstreut werden kann.

Es ist auch daran gedacht, die pneumatischen Saatgutverteilerelemente an ihren Ausgängen, statt mit Leit- und/oder Prallvorrichtungen, mit einem vom Luftstrom der Saatgutförderstrecke und Aufpralleffekt des Saatgutes in Rotation versetzten Laufrades nach dem Axial- oder Radialprinzip aufgebauten Streuvorrichtung zu versehen und so das Saatgut nach der Erfindung zu verstreuen.

Ebenso ist denkbar, daß das nach den Dosiergeräten abfließende Saatgut in eine, an etwa gleicher Stelle angeordnet wie die Saatgutverteilerelemente nach der Erfindung, Injektorschleuse fließt und von hier mittels regelbarer Druckluft nach dem Erfindungsgedanken verstreut wird.

Um eine absolut gleichmäßige Verstreuung des Saatgutes sicher zu gewährleisten, ist die Drehzahl bzw. der Druck der Druckluft der Saatgutverteilerelemente so zu wählen, daß sich beide Flugbahnen vorzugsweise über die gesamte Breite der Saatgutablagefläche überschneiden. Gegebenenfalls kann eine stegartige Trennvorrichtung im Inneren der Schutzvorrichtung dafür sorgen, daß beide Flugbahnen getrennt gehalten werden, um sich nicht gegenseitig zu behindern. Die Schutzvorrichtung kann gegebenenfalls im Inneren mit weiteren Prallvorrichtungen und etwa trichterförmig zum Boden hin derart erweitert werden, daß sich eine schmale Austrittöffnung für das Saatgut über die Gesamtbreite der Saatgutablagefläche ergibt.

Um Materialkosten zu sparen, kann es unter Umständen durchaus vorteilhaft und zweckmäßig sein, daß die Saatgutverteilerelemente nach der Erfindung im Schutz der Planierschiene, im Bereich von außen, bis etwa zur Mitte angeordnet sind, gegebenenfalls auch nur eines in der Mitte, das gegebenenfalls mit zwei übereinanderliegenden gegenläufigen Verteilerscheiben ausgebildet ist, wobei die Saatgutzuführung der unteren Verteilerscheibe durch die hohle Mittelachse erfolgen kann und die der oberen Verteilerscheibe durch den Zwischenraum zwischen der Mittelachse und dem äußeren Rohr; oder das Saatgut an einer Verteilerscheibe an zwei verschiedenen geeigneten Stellen aufgegeben wird und so das Saatgut von der Mitte nach Außen verstreut wird.

Es ist auch daran gedacht, bekannte Sämaschinen die ein angetriebenes gegen die Fahrtrichtung rotierendes Bodenbearbeitungswerkzeug aufweisen, mit den erfindungsgemäßen Saatgutverteilerelementen auszurüsten, wobei das Saatgut wiederum nach dem Erfindungsvorschlag verstreut wird. Bei dieser Version gelangt das Saatgut direkt auf die wasserführende Sohle, wenn gegebenenfalls auf den Einsatz der schneidenden Vorrichtung an der Planierschiene und gegebenenfalls auch auf die Planierschiene selbst verzichtet wird.

In einem weiteren Vorschlag nach der Erfindung ist daran gedacht, Sämaschinen mit einer Bodenbearbeitungsvorrichtung, mit sich um eine vertikal ausgerichtete Achse kreisenden Bodenbearbeitungswerkzeugen, beispielsweise einer Kreiselegge, mit den erfindungsgemäßen Saatgutverteilerelementen auszurüsten. Dabei ist nach den sich um eine vertikal ausgerichtete Achse kreisenden Bodenbearbeitungswerkzeugen, eine sich über die gesamte Arbeitsbreite erstreckende, quer zur Fahrtrichtung angeordnet, um eine horizontal ausgerichtete Achse rotierende, von einem Abtrieb der Kreiselegge angetriebene, in oder gegen die Fahrtrichtung drehende Bodenzerkleinerungsvorrichtung vorgesehen. Diese kann mit geeigneten, vorzugsweise auf Griff stehenden Werkzeugen, wie etwa Zinken, Stegen oder ähnlichen bestückt sein; also Werkzeuge, die in der Lage sind, den Boden noch zusätzlich zu zerkleinern und zumindest einen derart großen Teil der von der Kreiselegge entgegen der Fahrtrichtung noch bewegten Erde, mit gegebenenfalls organischer Masse, wie sie für das Abdecken des Saatgutes erforderlich ist, nach dem Erfindungsvorschlag über die Planierschiene und gegebenenfalls über die Walze,- bzw. bei einer gegen die Fahrtrichtung rotierenden Bodenzerkleinerungsvorrichtung über sich und gegebenenfalls über die Walze zu schleudern, wobei wiederum das Saatgut nach der Erfindung im Bereich der Schutzvorrichtung der Planierschiene, bzw. bei einer gegen die Fahrtrichtung drehenden Bodenzerkleinerungsvorrichtung auch ohne dieser verstreut wird.

In einem weiteren Vorschlag nach der Erfindung ist daran gedacht, hinter einer Kreiselegge, in unmittelbarer Nähe des Umdrehungsradius, gegebenenfalls bis auf Zinkenkontakt der um eine vertikal ausgerichtete Achse kreisenden Bodenbearbeitungswerkzeuge eine höhenverstellbare, bevorzugt etwa V-förmig ausgebildete Planierschiene in schleppender Anstellung anzuordnen, mit der am jeweiligen äußeren Ende, rechts und links je ein Saatgutverteilerelement nach der Erfindung integriert ist und so das Saatgut direkt in den geschützten Innenraum der Planierschiene eingestreut wird.
Um dabei den Durchfluß, der von der Kreiselegge entgegen der Fahrtrichtung abgeschleuderten Erde nicht mehr als nötig zu behindern, ist diese mit der Spitze in Fahrtrichtung weisend angeordnet. Der der Erde abgewandte Schenkel der V-förmigen Planierschiene weist dabei eine Schutzvorrichtung und gegenenfalls auch eine Trennvorrichtung, etwa in der Richtung dem der Erde zugewandten Schenkel soweit auf, daß sich wiederum eine schmale Austrittöffnung für das Saatgut über die gesamte Breite der Planierschiene zur Saatgutablagefläche hin ergibt. Der der Erde zugewandte Schenkel der V-förmigen Planierschiene ist dabei zum Boden hin derart verlängert, daß eine Planierung der Saatgutablagefläche nach der Erfindung möglich ist. Außerdem schützt die Verlängerung die schmale Austrittöffnung für das Saatgut vor der von dem kreisenden Werkzeug abgeschleuderten Erde. Die Einstellung der Saatgutablagetiefe bzw. die Abdeckungshöhe des Saatgutes erfolgt dabei über die Höheneinstellung der vorzugsweise arretierten Planierschiene, also sinngemäß wie bei der Anordnung der Planierschiene, hinter der um eine horizontal ausgerichtete Achse rotierenden Bodenbearbeitungsvorrichtung.

In weiterer Ausgestaltung der Erfindung ist ferner daran gedacht, an der Spitze, oder in einem günstigen Abstand unterhalb der V-förmigen Planierschiene, vorzugsweise mit dieser
kombiniert und nahe am Umdrehungskreis der kreisenden Werkzeuge, eine im Abstand zur Planierschiene verstellbare schneidende Vorrichtung nach der Erfindung vorzusehen. Dabei ist
diese zum Boden hin derart begrenzt angeordnet, daß sie nicht
unter die Eindringtiefe des kreisenden Werkzeuges der Kreiselegge abfallen kann. Das hat unter anderem den Vorteil, daß
die schneidende Vorrichtung schon in einem teils vorgelockerten Boden, nur noch die verbliebenen Erdstege mit eventuell
vorhandenen Unkräutern abscheren muß und andauernd von gegebenenfalls vorhandener organischer Masse und Unkräuter, die
sich um die schneidende Vorrichtung legen könnten von dem
kreisenden Werkzeug befreit wird.
Wenn die schneidende Vorrichtung direkt an der Spitze der
V-förmigen Planierschiene angebracht und in Richtung Boden
zeigend angeordnet ist, ist eine Saatgutablage auf die wasserführende Sohle zumindest bei einem vorgelockerten Boden möglich, wenn gleichzeitig die Planierschiene derart tief angestellt ist, daß die gesamte von der Kreiselegge entgegen der
Fahrtrichtung abgeschleuderten Erde über sie fließt.

Besonders vorteilhaft ist es, wenn direkt über der V-förmigen
Planierschiene angeordnet und vorzugsweise mit dieser kombiniert, eine von einem Abtrieb der Kreiselegge angetriebene,
in Fahrtrichtung rotierende Abstreifvorrichtung vorgesehen
ist, die die von der Kreiselegge aufgeworfene Erde mit gegebenenfalls organischer Masse, die sich zumindest teilweise
auf dem der Erde abgewandten Schenkel, der in ihrem Neigungswinkel etwa schleppend angestellten Planierschiene ansammeln
könnte und den kontinuierlichen Erdfluß behindern würde, entgegen der Fahrtrichtung laufend abgeschleudert wird und sich
dann auf das Saatgut, nach dem einwalzen aufstreut.

Die Abstreifvorrichtung über der V-förmigen Planierschiene
kann in einfachster Ausführung ein mit gewendelten Stegen bestückter runder Balken sein, oder auch eine, einer

Förderschnecke ähnlichen Vorrichtung wäre denkbar, wobei die Wendelungen vorteilhaft je zur Hälfte rechts- und linksdrehend ausgebildet sind wodurch sich die Erde, wie anderweitig schon erwähnt, mehr auf die Schlepperspuren aufstreut.

Statt dieser rotierenden Abstreifvorrichtung über der V-förmigen Planierschiene, wäre mit derselben Aufgabenstellung auch denkbar, daß an den sich um eine vertikal ausgerichtete Achse kreisenden Werkzeugen der Kreiselegge, also an deren Zinken, etwa ungleich höher wie der der Erde abgewandte Schenkel der Planierschiene, gegebenenfalls auch zusätzlich ungleich tiefer wie die Spitze- bzw. wie der der Erde zugewandte Schenkel, eine bevorzugt auf Griff stehende, schneidende Abstreifvorrichtung angebracht ist, die dafür sorgt, daß die Planierschiene ständig an ihrer oberen,- sowie gegebenenfalls auch an ihrer unteren Seite von anhaftender Erde und organischer Masse befreit wird. Die schneidenden Abstreifvorrichtungen können dabei jeweils einzeln am jeweiligen Werkzeug angebracht werden, oder aber um die beiden Werkzeuge gegenseitig zu stabilisieren, durchgehend in der Horizontale mit vorzugsweise ebenfalls einer schneidenden, einer Vortriebsschraube ähnlichen Vorrichtung miteinander verbunden werden.

Diese einer Vortriebsschraube ähnlichen Vorrichtung und die auf Griff stehende Abstreifvorrichtung haben den Vorteil, daß durch die kreisenden Umdrehungen der Kreiseleggenwerkzeuge die Erde mehr senkrecht entgegen der Fahrtrichtung aufgeworfen wird und so die V-förmige Planierschiene mit ihrer Austrittöffnung für das Saatgut nicht so tief in die Erde abgesenkt werden muß. Dadurch kann man eventuelle Verstopfungen ausschalten und es ist in jedem Falle gewährleistet, daß genügend Erde für die Bedeckung des Saatgutes über die Planierschiene fließt.

Ebenso wäre denkbar, daß ein Werkzeug der Kreiselegge die Abstreifvorrichtung höher und das andere Werkzeug diese tiefer angebracht hat und beide mit einer schräg angestellten, gegebenenfalls auch schneidenden Vorrichtung, miteinander verbunden sind.

- 14

Diese Abstreifvorrichtungen können dabei soweit über das kreisende Werkzeug der Kreiselegge hinausragen, daß sie in den Umdrehungsradius des benachbarten kreisenden Werkzeuges fast bis auf Werkzeugkontakt dessen, eingreifen.

Diese Abstreifvorrichtungen sind nicht nur allein deshalb von großem Vorteil, weil sie die Planierschiene ständig abstreifen, sondern weil sie zusätzlich, zumindest mit der unteren Abstreifvorrichtung, eine ganzflächige, sehr flache, etwa auf dem Niveau der Saatgutablagetiefe ausgerichtete Bodenbearbeitung ermöglicht, wobei zum Saatzeitpunkt vorhandene Restpflanzen und Unkräuter, zusätzlich lückenlos abgeschoren bzw. abgeschnitten werden. Ebenso werden größere Erdkluten, die auf der Bodenfläche aufliegen, hauptsächlich mit der oberen Abstreifvorrichtung zusätzlich zerkleinert und somit das Saatgut noch sicherer mit feinerde abgedeckt, was einen weiteren Teil der Aufgabenstellung nach der Erfindung optimal verwirklicht.

Vollständigkeitshalber ist noch zu bemerken, daß die Saatgutverteilerelemente nach dem Erfindungsprinzip, auch anders ausgebildet sein können, wenn mit ihnen eine gezielte und gleichmäßige Verstreuung des Saatgutes über die gesamte Saatgutablagefläche möglich ist und daß alle Saatgutverteilerelemente mit allen Ausführungsarten der Planierschiene nach der Erfindung integriert werden können. Ebenso ist zu bedenken, daß die Saatgutverteilerelemente, mit den verschieden ausgebildeten Planierschienen auch mit anderen Bodenbearbeitungsvorrichtungen und mit anderen Werkzeugen kombiniert werden können, wenn mit ihnen zumindest ein derartiger Teil Erde über die Planierschiene gefördert werden kann, wie für eine ausreichende Bedeckung des Saatgutes nötig ist.

Die Vorteile der Erfindung werden besonders deutlich, wenn man bedenkt, daß es erstmals möglich ist, Saatgut auf bearbeiteten sowie auf unbearbeiteten Böden, sowie auch in Gegenwart von organischer Masse auf eine vollkommen ebene Saatgutablagefläche, gegebenenfalls auch auf die wasserführende

- 15 -

Sohle breitflächig abzulegen und dies ohne Säschare oder sonstigen Vorrichtungen, die bekannter Weise immer irgendwie den Durchfluß des Bodens sowie besonders auch der organischen Masse behindern. Außerdem erfolgt durch den Wegfall der Säschare, eine enorme Material- und Gewichtseinsparung und durch die schneidenden Vorrichtung an der Planierschiene bzw. durch die schneidende Abstreifvorrichtungen am kreisenden Werkzeug, eine sichere Vernichtung der beim Saatzeitpunkt vorhandenen Unkräutern und gergleichen.

Die Zeichnungen zeigen in:

Fig. 1, eine schematische Seitenansicht des in Fahrtrichtung A, rotierenden Bodenbearbeitungswerkzeuges, der Planierschiene mit Schutzvorrichtung und ein Saatgutverteilerelement nach der Erfindung.

Fig. 2, eine schematische Seitenansicht des gegen die Fahrtrichtung A, rotierenden Bodenbearbeitungswerkzeuges, ohne Planierschiene, mit anders ausgebildeter Schutzvorrichtung und mit Saatgutverteilerelement.

Fig. 3, ein rotierendes Werkzeug mit Planierschiene, Schutzvorrichtung, schneidender Vorrichtung und ein, um eine etwa vertikal ausgerichtete Achse rotierende integrierte Verteilerscheibe, bzw. Saatgutverteilerelement.

Fig. 4, ein Werkzeug wie Fig. 1 und 3, mit Planierschiene, Schutzvorrichtung und stegartigen Trennvorrichtungen.

Fig. 5, eine Rückansicht der Sämaschine, mit Dosiergeräten, mit Rohrsystem und der Anordnung der erfindungsgemäßen Saatgutverteilerelemente, ohne Planierschiene.

Fig. 6, eine Anordnung der Saatgutverteilerelemente hinter dem rotierenden Werkzeug in Draufsicht und der bevorzugten Drehrichtung der Verteilerscheiben.

Fig. 7, eine Planierschiene mit angedeuteten integrierten Saatgutverteilerelementen, links- und rechtsdrehend, ohne Schutzvorrichtung.

Fig. 8, der rechte Teil einer Planierschiene mit integrierten Saatgutverteilerelement, nur rechtsdrehend.

Fig. 9, schematische Seitenansicht der Planierschiene mit Schutzvorrichtung und einer möglichen Anordnung eines integrierten Saatgutverteilerelementes bzw. Verteilerscheibe, um eine etwa vertikal ausgerichtete Achse rotierend, links- und rechtsdrehend möglich.

Fig. 10, wie Fig. 9, aber Saatgutverteilerelement bzw. Verteilerscheibe um eine horizontal bis vertikal ausgerichtete Achse rotierend und mit schneidender Vorrichtung und Walze.

Fig. 11, wie Fig, 9, nur Saatgutverteilerelement bzw. Verteilerscheibe anders angeordnet.

Fig. 12, eine schematische Seitenansicht einer Bodenbearbeitungsvorrichtung, mit einem um eine vertikal ausgerichtete Achse kreisenden Bodenbearbeitungswerkzeug, in diesem Fall eine Kreiselegge mit Packerwalze und mit einer etwa V-förmigen Planierschiene und angedeuteten schneidende Abstreifvorrichtungen und angedeuteten durchgehenden Verbindung in der Horizontale, zur Stabilisierung der Werkzeuge.

Fig. 13, wie Fig. 12, aber mit anders ausgestalteter Planierschiene und stegartigen Trennvorrichtung und einer höher und einer tiefer angeordneten schneidenden Abstreifvorrichtung mit Verbindung und einer angedeuteten verstellbaren schneidende Vorrichtung unterhalb der Planierschiene.

Fig. 14, eine etwa V-förmig ausgebildete Planierschiene mit einer Injektorschleuse nach dem Erfindungsprinzip.

0207368

Fig. 15, den Ausgang eines pneumatischen Saatgutverteilerelementes mit einer nach dem Axialprinzip ausgebildeten, das
Saatgut streuenden Vorirchtung.

Fig. 16 und 17, eine mögliche Ausbildung der um eine horizontal oder vertikal ausgerichteter Achse rotierenden Saatgutverteilerelemente bzw. Verteilerscheiben, integrierbar.

Fig. 18, eine schematische Seitenansicht eines Kreiseleggenwerkzeuges mit Planierschiene und integrierten Saatgutverteilerelement bzw. Verteilerscheibe und eine, in Fahrtrichtung um eine horizontal ausgerichtete Achse rotierende Bodenzerkleinerungsvorrichtung und Walze.

Fig. 19, ein Kreiseleggenwerkzeug mit einem Saatgutverteilerelement nach der Erfindung und einer gegen die Fahrtrichtung
rotierende Bodenzerkleinerungsvorrichtung.

Fig. 20, ein Kreiseleggenwerkzeug mit einer etwa V-förmigen
Planierschiene und einer in Fahrtrichtung rotierende Abstreifvorrichtung.

Fig. 21, ein Kreiseleggenwerkzeug mit einer etwa V-förmig
ausgebildeten Planierschiene und einer schneidenden Vorrichtung an der Spitze der Planierschiene, sowie mit einer stegartigen Trennvorrichtung und einer Abstreifvorrichtung am
kreisenden Werkzeug.

Das Ausführungsbeispiel zeigt die Anwendung des Erfindungsprinzips in Kombination mit einer Bodenbearbeitungsvorrichtung, die ein in Fahrtrichtung rotiernedes Werkzeug aufweist.

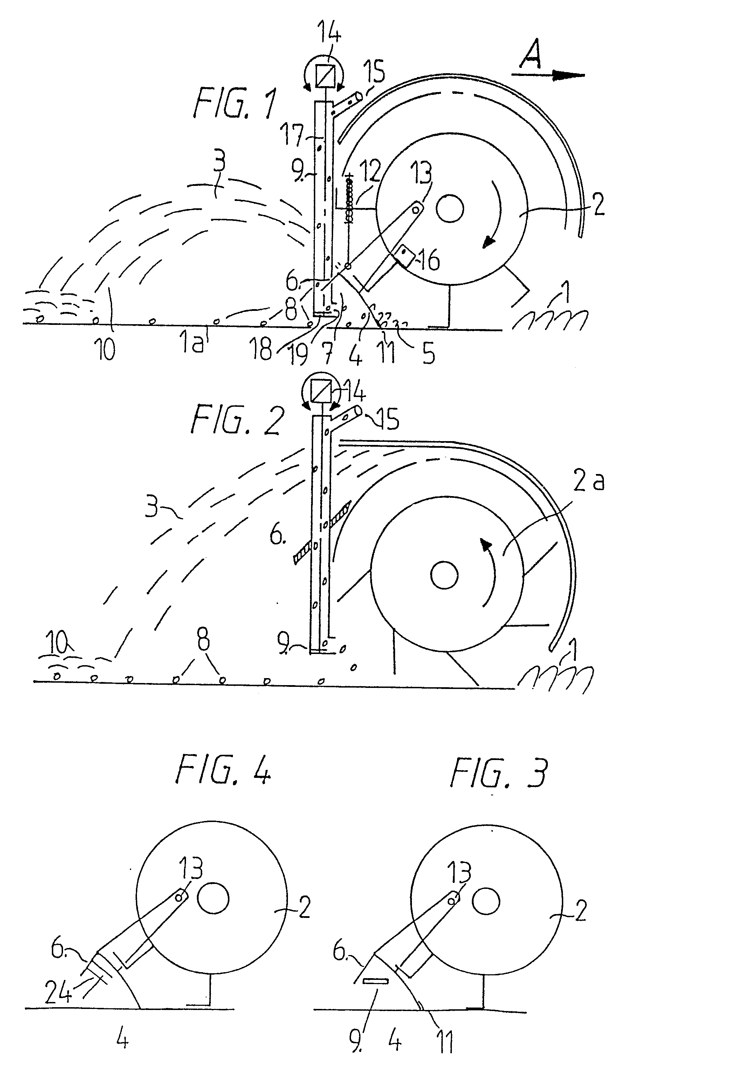

In Fig. 1, ist bei 1 das Erdreich zu erkennen. Das rotierende
Werkzeug 2 der Bodenbearbeitungsvorrichtung, hier als Fräse
angedeutet, nimmt eine vorgegebene Erdschicht vom Boden 1 ab
und schleudert sie nach hinten weg. Bei 4 ist die durch 12
federbelastbare Planierschiene, mit schneidender Vorrichtung
11 erkennbar, die die Saatgutablagefläche 1a einebnet und diese gegebenenfalls mit dem Erdvorrat 5 planiert. Vom hier nicht gezeichneten Saatgutbehälter fließt das Saatgut 8 über den unteren Teil des Rohrsystems 15 in das Saatgutverteilerelement 9 ein. Durch den angedeuteten Antrieb 14 und der Mittelachse 17 fängt die Verteilerscheibe 18 am Saatgutverteilerelement 9 zu rotieren an, wobei das Saatgut 8 durch die Austrittöffnung 19 in horizontalem Flug, hinter der Planierschiene 4 bzw. im Bereich 7 der Schutzvorrichtung 6 quer zur Fahrtrichtung A, eingestreut wird. Anschließend wird das zuviel an Erdvorrat 5, bzw. die Resterde, was bei 3 erkennbar ist über die Planierschiene 4 geschleudert und streut sich bei 10 auf das Saatgut 8 auf.

Durch die auf gleicher Höhe nach hinten versetzte Lagerung 13 der Planierschiene 4 am hier nicht gezeichneten Maschinenrahmen, geht diese bei jedem hochheben der Sämaschine an ihre Ausgangsstellung zurück, das heißt, an die unmittelbare Nähe des rotierenden Werkzeuges 2, wobei verbackenes mit organischer Masse behaftetes Erdreich jeweils abgesprengt wird. Durch den Anschlag 16, der hier nur angedeutet ist, kann die Planierschiene 4 zum Boden hin in einem vorgewählten Abstand eingestellt werden, wodurch erreicht wird, daß die Saatgutablagetiefe unabhängig gegenüber der Bearbeitungstiefe durch das Bodenbearbeitungswerkzeug 2 eingestellt werden kann.

Fig. 2, zeigt bei 1 das Erdreich , das durch ein gegen die Fahrtrichtung A rotierendes Bodenbearbeitungswerkzeug 2a abgehoben wird und auf das Saatgut 8, durch das vorher vom Saatgutverteilerelement 9 aufgestreute Saatgut 8, bei 10 aufgestreut wird. Bei 6 ist außerdem die Schutzvorrichtung erkennbar, in deren Bereich das Saatgut ungestört nach dem Erfindungsprinzip eingestreut werden kann. Eine Planierschiene ist bei dieser Version nicht unbedingt erforderlich.

Fig. 4, zeigt unter anderem bei 24 die Trennvorrichtung, die dafür sorgt, daß beide Flugbahnen getrennt gehalten werden können.

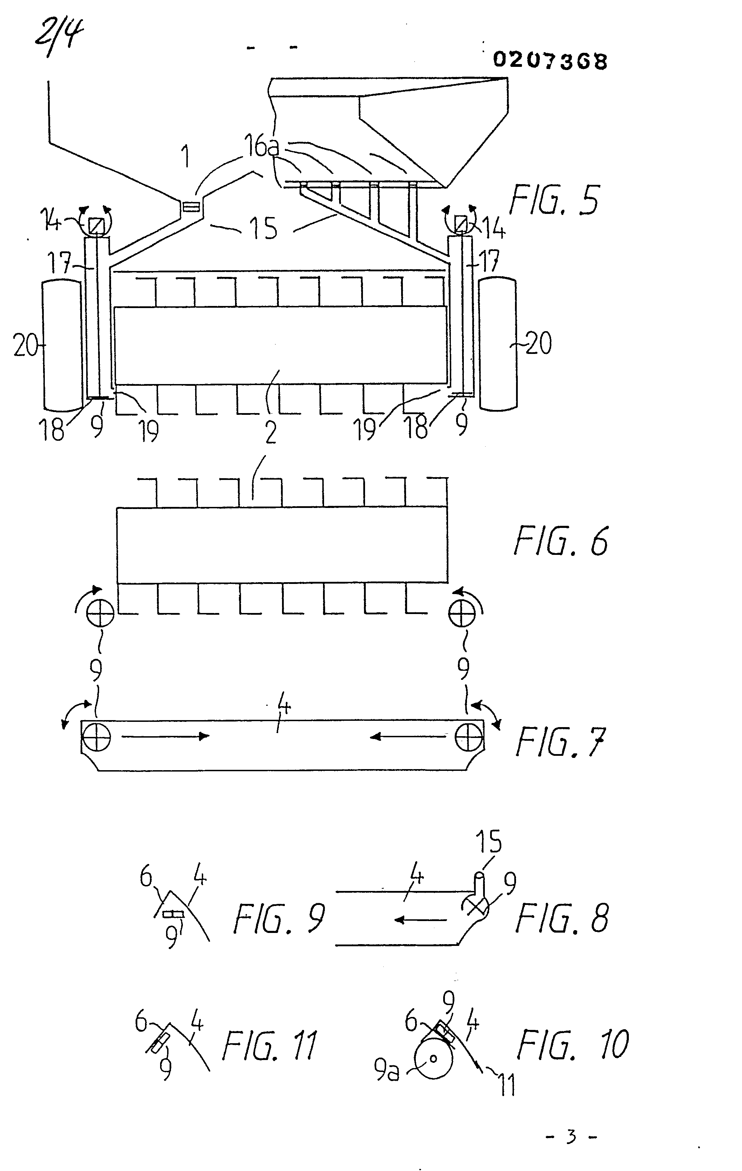

Fig. 5, zeigt eine Rückansicht der Sämaschine und die Anordnung der Saatgutverteilerelemente 9 und 16 zeigt die Dosiergeräte mit dem Rohrsystem 15, durch das das Saatgut zweigeteilt zu den links und rechts, seitlich neben der Bodenbearbeitungsvorrichtung angeordneten Saatgutverteilerelementen 9 abfließt. Bei 14 ist der angedeutete Antrieb der Verteilerscheiben 18 über die Mittelachse 17 erkennbar und 19 zeigt die Austrittöffnungen für das Saatgut, die ein verstreuen des Saatgutes jeweils quer zur Fahrtrichtung A gewährleisten. Die Laufräder der Sämaschine sind bei 20 angedeutet.

Fig. 10, zeigt unter anderem die Walze 9a die das aufgestreute Saatgut schon in die Erde drückt, bevor es mit der Erde die über die Planierschiene fließt, abgedeckt wird.

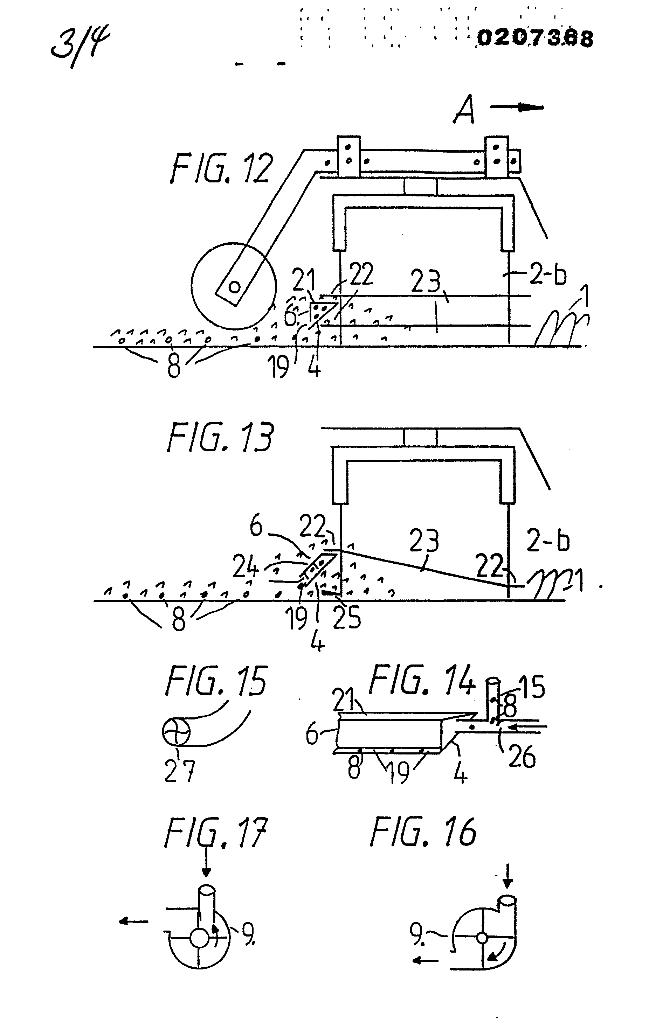

In Fig. 12, ist bei 1 das Erdreich zu erkennen, das von den, um eine vertikal ausgerichtete Achse kreisenden Bodenbearbeitungswerkzeugen 2b aufgenommen und entgegen der Fahrtrichtung A abgeschleudert wird. Bei 21 ist der der Erde abgewandte Schenkel der etwa V-förmigen Planierschiene, bei 6 die Schutzvorrichtung und bei 4 der der Erde zugewandte längere Schenkel zu erkennen der die Erde planiert und der die schmale Austrittöffnung für das Saatgut 19, vor der vom kreisenden Werkzeug abgeschleuderten Erde schützt. Die Zahl 22 zeigt die schneidenden auf Griff stehenden Abstreifvorrichtungen, die die Planierschiene ständig an ihrer oberen und gegebenenfalls auch an ihrer unteren Seite von anhaftender Erde und organischer Masse befreien und die ebenfalls, wie die schneidenden einer Vortriebsschraube ähnlichen Vorrichtungen 23, die die beiden Kreiseleggenwerkzeuge miteinander verbindet, dazu beitragen, daß die Erde mehr senkrecht entgegen der Fahrtrichtung A, aufgeworfen wird und so in jedem Fall genügend Erde über die Planierschiene fließt, wie für die Bedeckung des Saatgutes nötig ist.

Fig. 13, zeigt wiederum ein Kreiseleggenwerkzeug 2b mit einer etwas anders, auch etwa V-förmig ausgebildeten Planierschiene 4, Schutzvorrichtung 6, stegartigen Trennvorrichtung 24 und der schmalen Austrittöffnung für das Saatgut 19. Je eine höher und eine tiefer angebrachte Abstreifvorrichtung mit schräg angestellter Verbindung, zeigen die Nummern 22, bzw. 23. Bei 25 ist außerdem die in ihrem Abstand zur Planierschiene verstellbare schneidende Vorrichtung angedeutet, die die noch verbliebenen Erdstege, der durch die kreisenden Werkzeuge vorgelockerten Erde abschert.

Fig. 14, zeigt in Fahrtrichtung A gesehen, den rechten Teil einer etwa V-förmigen Planierschiene 4, mit dem der Erde abgewandten Schenkel 21 und der Schutzvorrichtung 6, in deren Innenraum das Saatgut 8 vom Rohrsystem 15 durch die Injektorschleuse 26 eingeblasen bzw. eingestreut wird und durch die schmale Austrittöffnung für das Saatgut 19 austritt.

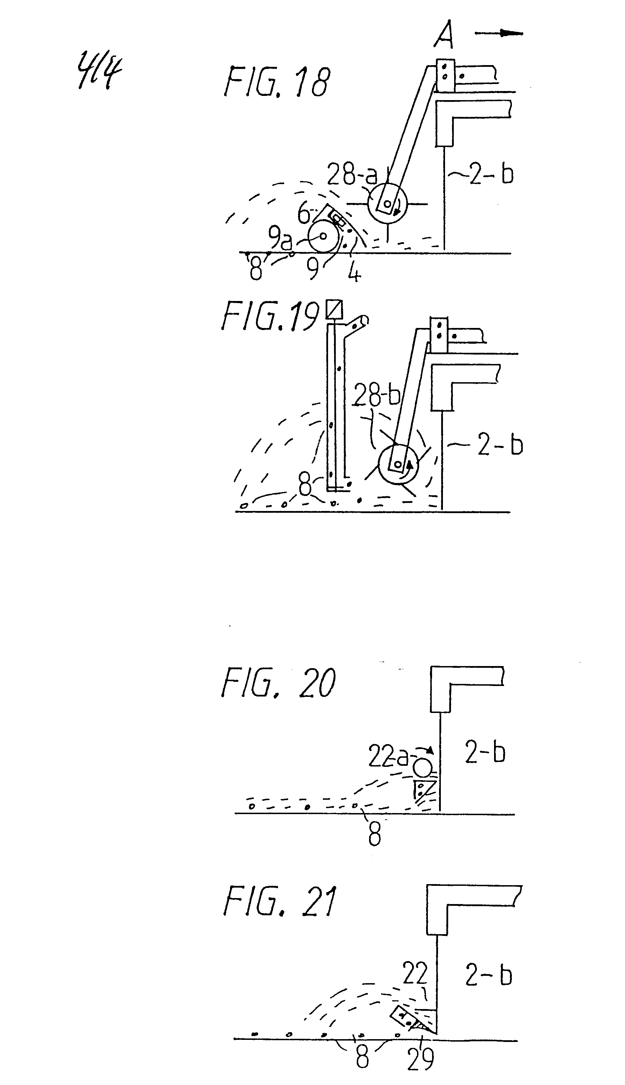

Bei Fig. 18, ist hinter einem Kreiseleggenwerkzeug 2b angeordnet, die Bodenzerkleinerungsvorrichtung 28a zu sehen, die zumindest einen derart großen Teil der von der Kreiselegge entgegen der Fahrtrichtung A noch bewegten Erde über die Planierschiene schleudert, bzw. wie bei Fig. 19 mit dem gegen die Fahrtrichtung rotierenden Bodenzerkleinerungswerkzeug 28b über sich schleudert, wie für eine ausreichende Bedeckung des Saatgutes nötig ist. Außerdem ist bei 9a die Walze angedeutet die das Saatgut in die Erde drückt bevor es abgedeckt wird. Diese Walze ist selbstverständlich auch mit den Fig. 19, 20 und 21 kombinierbar.

In Fig. 20, ist bei 22a die in Fahrtrichtung rotierende Abstreifvorrichtung angedeutet, die den der Erde abgewandten Schenkel der etwa V-förmigen Planierschiene ständig von der, sich auf ihm ansammelnder Erde und organischer Masse befreit und auf das Saatgut aufstreut.
Fig. 21, zeigt bei 29 eine schneidende Vorrichtung direkt an der Spitze der Planierschiene die in Richtung Boden zeigend angeordnet ist, wobei die gesamte von der Kreiselegge abgeschleuderte Erde über sie fließt und somit das Saatgut auf die wasserführende Sohle abgelegt wird. Bei 22 ist wiederum die auf Griff stehende Abstreifvorrichtung angedeutet.

Hermann Tremmel

8702 Greussenheim
Gutshof

P a t e n t a n s p r ü c h e .

Vorrichtung zur breitflächigen Saatgutverteilung.
Sämaschine in Verbindung mit bekannten Bodenbearbeitungsgeräten.

1. Vorrichtung zur breitflächigen Saatgutverteilung für Sämaschinen, bei der das Saatgut ab den Dosiergeräten (16a)
über ein von den Dosiergeräten (16a) seitlich neben einer rotierenden Bodenbearbeitungsvorrichtung (2) verlaufendes Rohrsystem (15) Saatgutverteilerelementen (9) zugeführt wird,
durch die es in horizontalem Flug im Bereich einer nahe hinter dem rotierenden Werkzeug (2) angeordneten über die gesamte Arbeitsbreite erstreckten Schutz bietenden Führungsvorrichtung (4), in diese integriert, auf die Saatgutablagefläche (1a) verstreut und anschließend abgedeckt wird, d a -
d u r c h   g e k e n n z e i c h n e t , daß die Führungsvorrichtung als Planierschiene (4) ausgebildet ist, die die
Saatgutablagefläche (1a) einebnet,
daß das Rohrsystem (15) auf beiden Seiten der Bodenbearbeitungsvorrichtung (2) verläuft und unten jeweils eins der
Saatgutverteilerelemente (9) aufweist, durch die der horizontale Saatgutabwurf quer zur Fahrtrichtung erfolgt.

2. Vorrichtung nach Anspruch 1, d a d u r c h   g e k e n n -
z e i c h n e t , daß die Planierschiene (4) am Maschinenrahmen gelenkig (13) und zum Boden hin federbelastbar (12)
ausgeführt ist,
daß die Planierschiene (4) an ihrer der Erde zugewandten Seite eine schneidende Vorrichtung (11) aufweist,
daß die Planierschiene (4) in ihrem Neigungswinkel und Abstand zum rotierenden Werkzeug (2) verstellbar ausgeführt ist,
daß der Neigungswinkel zwischen 45- und 150 Grad verstellbar ist,
daß die Planierschiene (4) an der der Erde abgewandten Seite
mit Stegen in geeigneten Abständen verlängert ist und die
oberen Enden jeweils von der Mitte der Planierschiene (4) ab wenigstens teilweise leicht nach Außen abgebogen sind.

3. Vorrichtung nach den Ansprüchen 1 und 2, d a d u r c h g e k e n n z e i c h n e t , daß für die Höhenverstellbarkeit der Planierschiene (4), der Maschinenrahmen einen beidseitigen verstellbaren Anschlag (16) hat, sowie die Planierschiene (4) eine Abstützung zum Boden hin aufweist, daß der Drehpunkt (13) der Planierschiene (4) am Maschinenrahmen auf etwa gleicher Höhe nach hinten versetzt zur Lagerung des rotierenden Werkzeuges (2) ausgeführt ist, daß die Planierschiene (4) vorzugsweise ein entgegen dem rotierenden Werkzeug (2) leicht gewölbtes Flachmaterial ist und an ihrer der Erde abgewandten Seite, entgegen der Fahrtrichtung (A) zum Boden hin eine abgewinkelte Schutzvorrichtung (6) aufweist, daß die schneidende Vorrichtung (11) im Abstand zur Planierschiene (4) verstellbar ausgeführt sein kann, daß die Planierschiene (4) jeweils an ihrem äußeren Ende, an der der Erde abgewandten Seite an ihrer Halterung einen Drehpunkt- und die Halterung nahe am unteren Ende eine Verstellmöglichkeit in Form von mehreren Bohrungen aufweist.

4. Vorrichtung nach Anspruch 1, d a d u r c h g e k e n n z e i c h n e t , daß das Saatgutverteilerelement (9) bei der um eine vertikal ausgerichtete Achse (17) rotierenden Verteilerscheiben (18) ein Rohr ist das an seinem unteren Teil eine Austrittöffnung (19) für das Saatgut (8) in Richtung auf das gegenüberliegende Saatgutverteilerelement (9) aufweist, daß die Austrittöffnung (19) einen Schutz gegen fliegende Erdpartikelchen aufweist, daß im Rohrinnern an der unteren Kante der Austrittöffnung (19), eine rotierende an einer Mittelachse (17) oben und unten gelagerte Verteilerscheibe (19) plaziert ist, daß die Verteilerscheibe an ihrer oberen Seite mit ungleich langen- und ungleich zur Mittelachse (17) angewinkelten Verteilerstegen bestückt ist, daß sich die Verteilerscheiben (19) um eine etwa vertikal ausgerichtete Achse (17) mit einer beliebigen Neigung bis hin zu einer sich um eine etwa horizontal ausgerichtete Achse drehen können,

daß die Drehrichtung links,- und/oder rechtsdrehend gewählt werden kann,

daß sich die Verteilerscheiben (19) bevorzugt im Drehsinn zueinander gegenläufig drehen,

daß die Drehzahl der Verteilerscheiben (19) regelbar ist, daß der Antrieb (14) der Verteilerscheiben (19) elektrisch, hydraulisch über die Schlepperanlagen erfolgt, oder von einem Abtrieb der Sämaschine bzw. Bodenbearbeitungsvorrichtung (2) erfolgt.

5. Sämaschine in Verbindung mit bekannten Bodenbearbeitungsgeräten nach den Ansprüchen 1 bis 4, d a d u r c h  g e - k e n n z e i c h n e t , daß die Bodenbearbeitungsvorrichtung ein angetriebenes in,- oder gegen die Fahrtrichtung (A) rotierendes Werkzeug (2, 2a) aufweist,

daß die Bodenbearbeitungsvorrichtung ein um eine vertikal ausgerichtete Achse kreisendes Werkzeug (2b) aufweist.

6. Sämaschine und Vorrichtung nach den Ansprüchen 1 bis 5, daß Sämaschinen die bauartbedingt eine längere auch ansteigende Saatgutförderstrecke nach den Dosiergeräten erfordern, sich d a d u r c h  k e n n z e i c h n e n , daß die Saatgutzuführung bis zu den Saatgutverteilerelementen (9) pneumatisch erfolgt und dann nach dem Erfindungsprinzip verstreut wird,

daß am Ende der pneumatischen Saatgutförderstrecke das verstreuen des Saatgutes (8) mit pneumatischen Saatgutverteilerelementen (27) erfolgt,

daß diese der Ausgang mindestens eines Hohlkörpers sind und mit einer düsenartigen das Saatgut streuenden Vorrichtung versehen sind, die wiederum mit Leit- und/oder Prallvorrichtungen ausgestattet sein können,

daß die Ausgänge der pneumatischen Saatgutverteilerelemente (27) mit einem vom Luftstrom der Pneumatik und Aufpralleffekt des Saatgutes in Rotation versetzten Laufrades versehen sind, daß das nach den Dosiergeräten (16a) abfließende Saatgut (8) in eine Injektorschleuse (26) fließt und ab hier mittels regelbarer Druckluft nach der Erfindung verstreut wird.

7. Sämaschine und Vorrichtung nach den Ansprüchen 1 bis 6, d a d u r c h   g e k e n n z e i c h n e t , daß die Saatgutverteilerelemente (9, 27) im Schutz der Planierschiene (4), im Bereich von außen bis zur Mitte angeordnet sind, daß auch nur eines in der Mitte angeordnet ist, das entweder mit zwei übereinanderliegenden gegenläufigen Verteilerscheiben ausgebildet ist, wobei die Saatgutzuführung der unteren Verteilerscheibe durch eine hohle Mittelachse erfolgt und die der oberen Verteilerscheibe, durch den Zwischenraum zwischen der Mittelachse und dem äußeren Rohr und so das Saatgut von der Mitte jeweils nach Außen verstreut wird, oder, daß das Saatgut (8) nur an einer Verteilerscheibe, an zwei verschiedenen geeigneten Stellen aufgegeben wird und so ebenfalls von der Mitte nach Außen verstreut wird.

8. Sämaschine und Vorrichtung nach den Ansprüchen 1 bis 7, daß bei Sämaschinen die eine Bodenbearbeitungsvorrichtung mit einer um eine vertikal ausgerichtete Achse kreisendes Werkzeug aufweisen, beispielsweise eine Kreiselegge, sich d a d u r c h   k e n n z e i c h n e n , daß nach den kreisenden Werkzeugen (2b) eine sich über die gesamte Arbeitsbreite erstreckende, quer zur Fahrtrichtung (A) angeordnete, um eine horizontal ausgerichtete Achse in oder gegen die Fahrtrichtung (A) rotierende Bodenzerkleinerungsvorrichtung (28a, 28b) vorgesehen ist,
daß die Bodenzerkleinerungsvorrichtung (28a, 28b) von einem Abtrieb der Kreiselegge angetrieben ist und vorzugsweise mit auf Griff stehenden Werkzeugen wie Zinken, Stegen, oder ähnlichen bestückt ist.

9. Sämaschine und Vorrichtung nach den Ansprüchen 1 bis 8, d a d u r c h   g e k e n n z e i c h n e t , daß hinter einer Kreiselegge (2b) in unmittelbarer Nähe des Umdrehungsradius, bis auf Zinkenkontakt der kreisenden Werkzeuge (2b) eine höhenverstellbare bevorzugt etwa V-förmig ausgebildete, mit der Spitze in Fahrtrichtung (A) zeigende Planierschiene (4) in schleppender Anstellung angeordnet ist, mit der am jeweiligen äußeren Ende ein Saatgutverteilerelement (9, 27) integriert ist,

daß der der Erde abgewandte Schenkel (21) eine Schutzvorrichtung (6) und auch eine stegartige Trennvorrichtung (24) etwa in der Richtung, dem der Erde zugewandtem Schenkel soweit aufweist, daß sich eine schmale Austrittöffnung (19) für das Saatgut (8) über die gesamte Breite der Planierschiene (4) zur Saatgutablagefläche (1a) hin ergibt.

daß der der Erde zugewandte Schenkel der Planierschiene (4) verlängert ist und diese arretierbar ist,

daß an der Spitze (29) oder in einem günstigen Abstand unterhalb der V-förmigen Planierschiene (4) vorzugsweise mit dieser kombiniert und nahe am Umdrehungsradius der kreisenden Werkzeuge (2b) eine im Abstand zur Planierschiene (4) verstellbare schneidende Vorrichtung (25) angeordnet ist.

10. Sämaschine und Vorrichtung nach den Ansprüchen 1 bis 9, d a d u r c h  g e k e n n z e i c h n e t , daß direkt über der V-förmigen Planierschiene (4) und bevorzugt mit dieser kombiniert, eine von einem Abtrieb der Kreiselegge angetriebene und in Fahrtrichtung rotierende Abstreifvorrichtung (22a) angeordnet ist,

daß die Abstreifvorrichtung (22a) ein mit gewendelten Stegen runder Balken, oder eine einer Förderschnecke ähnlichen Vorrichtung ist, wobei die Wendelungen je zur Hälfte links- und rechtsdrehend ausgebildet sind,

daß an den kreisenden Werkzeugen (2b) jeweils mindestens eine bevorzugt auf Griff stehende schneidende Abstreifvorrichtung (22) in verschiedenen Höhen angebracht ist,

daß die Abstreifvorrichtung (22) jeweils durchgehend in der Horizontale mit einer schneidenden, vorzugsweise einer Vortriebsschraube ähnlichen Vorrichtung (23) miteinander verbunden sind,

daß ein kreisendes Werkzeug (2b) die Abstreifvorrichtung (22) weiter oben und das andere Werkzeug (2b) diese weiter unten angebracht hat und beide Abstreifvorrichtungen (22) bzw.

0207368

Werkzeuge wiederum durch eine bevorzugt schneidende und schräg verlaufende Vorrichtung (23) miteinander verbunden sind,
daß die Abstreifvorrichtungen (22) soweit über die kreisenden Werkzeuge (2b) der Kreiselegge hinausragen, daß sie jeweils in den Umdrehungsradius des benachbarten kreisenden Werkzeuges (2b) fast bis auf Zinkenkontakt dessen eintauchen.

11. Sämaschine und Vorrichtung nach einem oder mehreren Ansprüchen von 1 bis 10, d a d u r c h  g e k e n n z e i c h - n e t , daß hinter der Planierschiene (4) mit dieser kombiniert, eine Walze mit bevorzugt glatter Oberfläche angeordnet ist,
daß die Walze angetrieben sein kann.

FIG. 1

FIG. 2

FIG. 4

FIG. 3

0207368

FIG. 5

FIG. 6

FIG. 7

FIG. 9

FIG. 8

FIG. 11

FIG. 10

0207368

**A** →

**FIG. 12**

21  22  23  2-b  1
6
8  19  4

**FIG. 13**

6  22  23  2-b
24  22  1
8  19  25
4

**FIG. 15**

27

**FIG. 14**

21  15
8
6
8  19  4  26

**FIG. 17**

9

**FIG. 16**

9

4/4

FIG. 18

A →

28-a

6

9a

8    9    4

~2-b

FIG. 19

28-b

8

~2-b

FIG. 20

22a

8

2-b

FIG. 21

22

8    29

2-b

Europäisches
Patentamt

**EUROPÄISCHER RECHERCHENBERICHT**

**0207368**
Nummer der Anmeldung

EP  86 10 8291

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 028 382  (E. WEICHEL)<br>* Ansprüche 1, 14, 16 * | 1,2 | A 01 B  49/06 |
| D,A | GB-A-1 094 681  (DOXAMS LTD.)<br>* Figur 2 * | 1 | |
| A | FR-A-2 342 015  (C. VAN DER LELY N.V.)<br>* Ansprüche 32-34; Figur 1 * | 1 | |
| D,A | DE-A-3 247 884<br>(LANDWIRTSCHAFTLICHE EIN- UND VERKAUFSGESELLSCHAFT HORST OHG)<br>* Ansprüche 3, 7; Figur 1 * | 1,2 | |
| D,A | DE-C-3 307 709<br>(ACCORD-LANDMASCHINEN HEINRICH WEISTE & CO., GMBH)<br>* Figur 1 * | 1 | RECHERCHIERTE SACHGEBIETE (Int. Cl.4)<br><br>A 01 B  49/06 |

Der vorliegende Recherchenbericht wurde für alle Patentansprüche erstellt.

| Recherchenort<br>BERLIN | Abschlußdatum der Recherche<br>01-09-1986 | Prüfer<br>SAMWEL P.N. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82